# FASCICULE DE BREVET EUROPEEN

(11) **EP 4 459 164 B1**
(45) Date de publication et mention de la délivrance du brevet: **04.02.2026**
(21) Numéro de dépôt: 24161768.7
(22) Date de dépôt: 06.03.2024
(51) Int. Cl.: F16K 17/16, F16K 17/40

(54) **PANNEAU D'EXPLOSION ET SON SYSTÈME D'AJUSTAGE EN SERRAGE POUR SA FIXATION**
EXPLOSIONSPLATTE UND KLEMMEINSTELLSYSTEM ZU DEREN BEFESTIGUNG
EXPLOSION PANEL AND CLAMPING ADJUSTMENT SYSTEM FOR THE FASTENING THEREOF

(30) Priorité: 05.05.2023 FR 2304523
(43) Date de publication de la demande: 06.11.2024
(73) Titulaire: Stif France, 49170 Saint-Georges-sur-Loire (FR)
(72) Inventeur: BURGOS, José, 49170 La Possonnière (FR)
(74) Mandataire: Aupetit, Muriel J. C.

(56) Documents cités:
- FR-A1- 2 943 043
- US-B2- 7 234 278

## Description

L'invention concerne le domaine des panneaux d'explosion.

Les panneaux d'explosion protègent des enceintes de stockage sans limitation, telles que silos, trémies, séchoirs, cuves, système de filtration, élévateurs à godets, etc., ou encore des machines de transformation de matière. Ces enceintes ou machines stockent des produits pulvérulents ou des gaz qui sous certaines conditions sont susceptibles de provoquer une augmentation de pression et de température à l'intérieur de l'enceinte, pouvant conduire à une explosion. Les panneaux d'explosion sont alors aptes à se déchirer dans leur zone de fragilisation en cas de surpression anormale dans les enceintes, engendrant un trou par où les gaz sous pression peuvent s'échapper.

Un panneau d'explosion comporte usuellement une feuille métallique dite de rupture comprenant une zone de fragilisation à proximité du bord périphérique de la feuille, un cadre supérieur disposé sur et autour de la feuille et servant à la fixation du panneau d'explosion, et au moins un joint d'étanchéité agencé sous et en périphérie de la feuille de rupture et recouvrant la zone de fragilisation. Il est également courant de disposer un joint d'interface d'étanchéité entre le cadre supérieur et la feuille de rupture. La fixation du panneau d'explosion autour d'une ouverture d'enceinte à protéger est obtenue par des moyens de vissage qui coopèrent avec des trous de fixation sur la totalité du pourtour du panneau, à proximité de la zone de fragilisation. Le cadre périphérique, le joint d'interface, la feuille de rupture et le joint d'étanchéité comportent des alésages en regard et disposés sur toute la périphérie du panneau pour constituer les trous de fixation dans lesquels sont destinés à être introduits les moyens de vissage. Le brevet US7234278B2 décrit un exemple de panneau d'explosion.

Le serrage des moyens de vissage assure la compression des joints d'étanchéité qui remplissent ainsi pleinement leur fonction. Des règles de serrage sont préconisées afin que les joints d'étanchéité, en particulier le joint disposé sous la feuille de rupture, s'écrasent de manière pondérée, sans excès. En effet, un écrasement trop important peut entraîner le déchirement de la zone de fragilisation située à proximité immédiate de la zone de fixation, et détériorer par conséquent le panneau qui devient inutilisable. Afin de faciliter pour l'opérateur l'ajustage du serrage, notamment sans clé dynamométrique, il est connu du brevet FR2943043B1 d'introduire dans les trous de fixation du panneau, des entretoises rapportées qui présentent une hauteur donnée avec un jeu approprié correspondant à l'écrasement idoine du joint d'étanchéité disposé sous la feuille de rupture. En serrant les moyens de vissage dans un trou de fixation, le joint se comprime et l'opérateur se rend compte nécessairement de ce que le serrage est atteint car l'entretoise bute alors sur la structure de l'enceinte. La compression du joint d'étanchéité est alors conforme à celle attendue et l'est de manière homogène sur toute la périphérie du panneau d'explosion.

Cependant, il est indispensable que l'opérateur n'omette pas de mettre des entretoises dans chacun des multiples trous de fixation. En cas d'oubli, l'optimisation du serrage et de la compression du joint, n'est pas assurée.

L'invention a donc pour but de fournir une solution alternative aux moyens manuels de contrôle habituel de serrage des moyens de fixation d'un panneau d'explosion, sans présenter notamment l'inconvénient précité.

L'invention porte sur un panneau d'explosion comportant une feuille métallique dite de rupture qui est dotée d'une zone de fragilisation (apte à se déchirer en cas de surpression à l'intérieur de la structure à laquelle est fixée le panneau d'explosion), un cadre dit de bridage qui est agencé sur la périphérie de la feuille de rupture, et au moins un joint d'étanchéité, en particulier un joint d'étanchéité dit joint d'appui qui agencé au moins en périphérie et contre (une face de) la feuille de rupture à l'opposé du cadre de bridage (le joint d'appui étant destiné à s'appuyer sur la structure à protéger), ainsi que des moyens d'ajustage en serrage (qui permettent de serrer des moyens de serrage pour la fixation du panneau d'explosion selon la hauteur d'écrasement appropriée du joint), le panneau d'explosion comportant en outre des orifices de fixation qui traversent l'épaisseur du cadre de bridage, de la feuille de rupture et dudit au moins un joint d'étanchéité. Le panneau d'explosion est caractérisé en ce que les moyens d'ajustage en serrage sont intégrés de manière monobloc à la feuille de rupture. On entend par « intégrés de manière monobloc à la feuille de rupture » concernant les moyens d'ajustage en serrage, le fait que les moyens d'ajustage en serrage sont solidaires de la feuille de rupture de manière inamovible.

Ainsi, par l'intégration même des moyens d'ajustage en serrage au panneau d'explosion, plus particulièrement par l'intégration directement à la feuille de rupture prise en sandwich entre le cadre de bridage et le joint d'appui, l'opérateur n'a plus à se préoccuper de rapporter des moyens amovibles d'ajustage et dès lors, le risque d'oubli est nécessairement évité. De plus, on s'affranchit de pièces rapportées au niveau des orifices de fixation et donc de pièces d'interface entre les joints d'étanchéité et les moyens de serrage, ce qui permet une coopération directe des moyens de serrage du type vis ou tiges filetées avec le ou les joints d'étanchéité garantissant une parfaite étanchéité par l'insertion du matériau d'étanchéité dans le filetage des vis lors de la compression.

Selon une caractéristique, les moyens d'ajustage en serrage sont disposés sur au moins une face de la feuille de rupture et autour d'alésages constituant partie des orifices de fixation, de préférence sur au moins la face dite inférieure de la feuille en regard du joint d'appui.

Avantageusement, la feuille présentant deux faces opposées (dites faces inférieure et supérieur, les moyens d'ajustage en serrage sont disposés sur les deux faces opposées de la feuille et autour des orifices de fixation. Cela permet lorsqu'un autre joint d'étanchéité dit joint d'interface est placé en sandwich entre la feuille de rupture et le cadre de bridage d'obtenir une compression équilibrée des deux côtés (contre chacune des faces) de la feuille de rupture.

Selon un exemple de réalisation préféré, les moyens d'ajustage en serrage forment des bosselages, en particulier issus d'une déformation par emboutissage de la feuille. Les bosselages en étant préférentiellement issus d'une déformation par emboutissage de la feuille de rupture métallique engendrent certes, par rapport au brevet précité FR2943043B1, un procédé de fabrication du panneau d'explosion nécessitant plus de temps et d'outillage en raison de l'étape d'emboutissage, néanmoins, l'intégration monobloc des bosselages présente plusieurs avantages tels que ceux cités au-dessus. Les bosselages forment des éléments mâles qui constituent des éléments de butée avec la surface rigide opposée à la feuille de rupture et contre laquelle se comprime le joint d'étanchéité ; une fois en butée, l'opérateur ressent un point dur lors du serrage signifiant que la compression idoine est atteinte.

Selon une caractéristique préférée, les moyens d'ajustage forment une alternance de plusieurs bosselages sur chacune des faces de la feuille de rupture. En particulier, les bosselages sont répartis tout autour d'un alésage de la feuille constituant partie d'un orifice de fixation, la répartition des bosselages sur les deux faces opposées de la feuille étant telle que le bosselage d'une face et le bosselage immédiatement adjacent de la face opposée forment un couple dont la distance de séparation est plus courte que la distance séparant un autre couple de bosselages.

Avantageusement, les moyens d'ajustage en serrage sont répartis de manière équilibrée tout autour des orifices de fixation (tout autour de chacun des alésages de la feuille constituant partie de chacun des orifices de fixation).

Selon encore une autre caractéristique, ledit au moins un joint d'étanchéité comporte des trous (traversants) en vis-à-vis des moyens d'ajustage en serrage. Ces trous ménagés dans le ou les joints d'étanchéité permettent ainsi aux bosselages, lors de la compression du ou desdits joints, de traverser le joint et de parvenir en butée contre une surface rigide.

Selon encore une autre caractéristique, les orifices de fixation du panneau sont constitués d'alésages en regard réalisés dans le cadre de bridage, la feuille de rupture, et ledit au moins un joint d'étanchéité, en particulier dans le joint d'appui et dans le joint d'interface lorsque ce dernier est disposé entre le cadre de bridage et la feuille de rupture. Avantageusement, ledit au moins un joint d'étanchéité, en particulier le joint d'appui, comporte des alésages qui constituent partie des orifices de fixation, chacun des alésages dans ledit au moins un joint d'étanchéité présente un diamètre ajusté à la section de moyens de serrage destinés à être introduits dans les orifices de fixation et en particulier tel que le matériau du joint soit destiné à s'insérer dans le filetage de corps filetés des moyens de serrage pour la fixation par serrage du panneau d'explosion.

Selon une caractéristique, chaque joint d'étanchéité comporte donc des alésages (formant partie des orifices de fixation du panneau dans lesquels sont destinés à être introduits des moyens de serrage pour la fixation du panneau), et autour de chaque alésage, des trous pour le passage des moyens d'ajustage en serrage solidaires de la feuille de rupture.

Le panneau d'explosion de l'invention est notamment destiné à être utilisé pour des silos, cuves, containers de batteries, systèmes de filtration, ou encore des machines de manutention ou de transformation de matière.

La présente invention est maintenant décrite à l'aide d'exemples uniquement illustratifs et nullement limitatifs de la portée de l'invention, et à partir des illustrations jointes, dans lesquelles :
- [Fig. 1] représente une vue de dessus d'un exemple de panneau d'explosion selon l'invention dont une partie du cadre supérieur de bridage est ôtée pour visualiser le dessous dudit cadre, ici visualiser le joint d'interface juste en-dessous.
- [Fig. 2] est une vue en perspective éclatée du panneau d'explosion de la figure 1 montrant des moyens d'ajustage en serrage selon l'invention.
- [Fig. 3] est une vue en perspective partielle de la feuille de rupture du panneau d'explosion de l'exemple de la figure 2, montrant plus en détail les moyens d'ajustage en serrage.
- [Fig. 4] représente une vue partielle en coupe du panneau d'explosion de la figure 1 selon l'épaisseur du panneau et selon un plan passant par un orifice de fixation du panneau, le panneau d'explosion étant posé sur et autour d'une ouverture d'une enceinte à protéger.
- [Fig. 5] correspond à la figure 4 en position fixée du panneau d'explosion à l'enceinte, grâce à des moyens de serrage du type par boulonnage.

Le panneau d'explosion 1 de l'invention illustré sur les figures est destiné à être utilisé pour protéger d'une explosion une structure en cas d'une surpression anormale à l'intérieur de celle-ci.

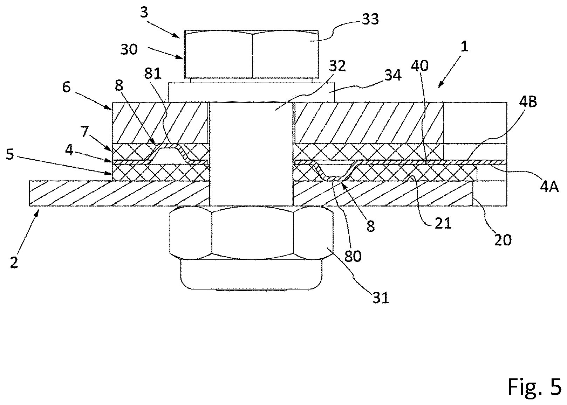

Le panneau d'explosion 1 tel qu'illustré sur la figure 5 obture ainsi de manière étanche une ouverture 20 d'une structure ou enceinte 2. Le panneau d'explosion 1 est fixé à la structure 2 et tout autour de l'ouverture 20 par des moyens de vissage 3 qui traversent à la fois le panneau d'explosion 1 via des orifices de fixation 10 et la structure 2. En cas de surpression, la partie centrale du panneau d'explosion 1 est apte à se déchirer.

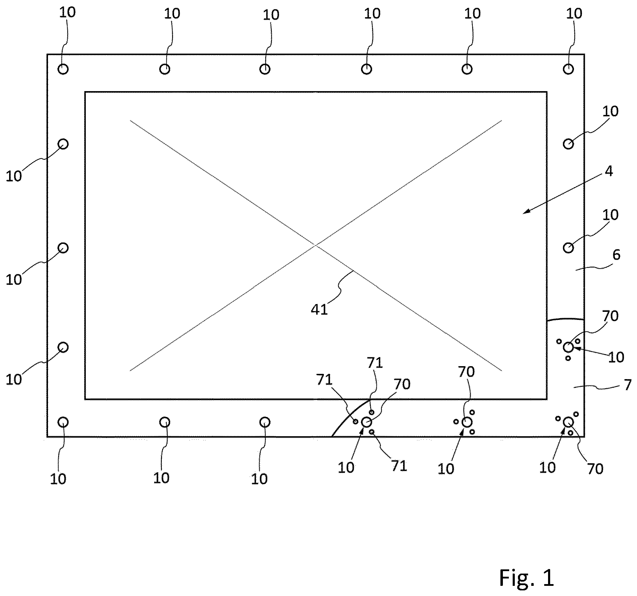

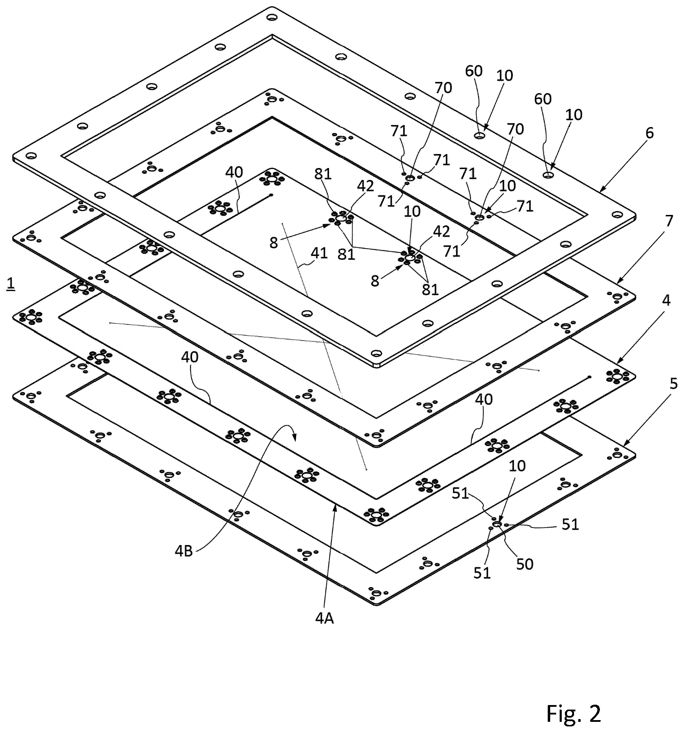

Tel que montré sur la figure 1 et sur la figure 2, le panneau d'explosion 1 comporte une feuille 4 métallique dite aussi par la suite feuille de rupture qui comprend une zone de fragilisation 40, un joint d'étanchéité 5 dit joint d'appui qui est plaqué contre l'une des faces (face dite inférieure 4A) de la feuille 4 et est destiné à s'appuyer contre l'enceinte 2, un cadre 6, de préférence métallique, qui est à fonction de bridage de la feuille 4 contre l'enceinte 2, et de préférence un joint d'étanchéité 7 dit joint d'interface qui est plaqué contre l'autre face de la feuille 4, à l'opposé du joint d'appui 5, et contre lequel est plaqué le cadre de bridage 6. Le joint d'interface 7 est donc pris en sandwich entre le cadre de bridage 6 et la feuille 4. Quant au joint d'appui 5, il est pris en sandwich entre la feuille 4 (à l'opposé du cadre de bridage 6) et l'enceinte 2 en position installée du panneau d'explosion 1 sur l'enceinte 2. En outre, le panneau d'explosion 1 comprend des moyens d'ajustage en serrage 8 qui permettent à l'opérateur, lors de la fixation du panneau, de ressentir lorsqu'est atteint le serrage ad hoc des moyens de serrage 3, comprimant de manière optimale le joint d'appui 5.

Le panneau d'explosion 1 est ici de forme rectangulaire, mais pourrait être carré ou circulaire ou encore selon une autre géométrie.

La feuille 4 est destinée à obturer l'ouverture de l'enceinte 2 et cela de manière étanche grâce au joint d'appui 5. La feuille 4 présente une épaisseur de préférence comprise entre 0,5 et 1,2 mm, par exemple de l'ordre de 0,8 millimètre. La zone de fragilisation 40 est agencée dans l'épaisseur de la feuille 4 et est apte à se rompre en cas de surpression dans l'enceinte 2. La zone de fragilisation 40 consiste par exemple en des fentes discontinues dans l'épaisseur de la feuille 4, réalisées généralement au laser, et reliées par des parties pleines frangibles. La zone de fragilisation 40 est disposée sur tout ou partie du pourtour de la feuille 4 et proche de la périphérie du cadre 6. Selon les modes de réalisation du panneau d'explosion 1, la zone de fragilisation 40 peut s'étendre sur tout le pourtour de la feuille 4 ou seulement en partie telle qu'en U comme illustré sur la figure 2. De plus, la feuille 4 peut comprendre des plis de rigidification 41, par exemple en forme de pointe de diamant. L'invention s'applique à n'importe quel type de feuille de rupture 4, en particulier à n'importe quel type d'agencement de la zone de fragilisation 40. La feuille 4 ne sera donc pas davantage décrite ici.

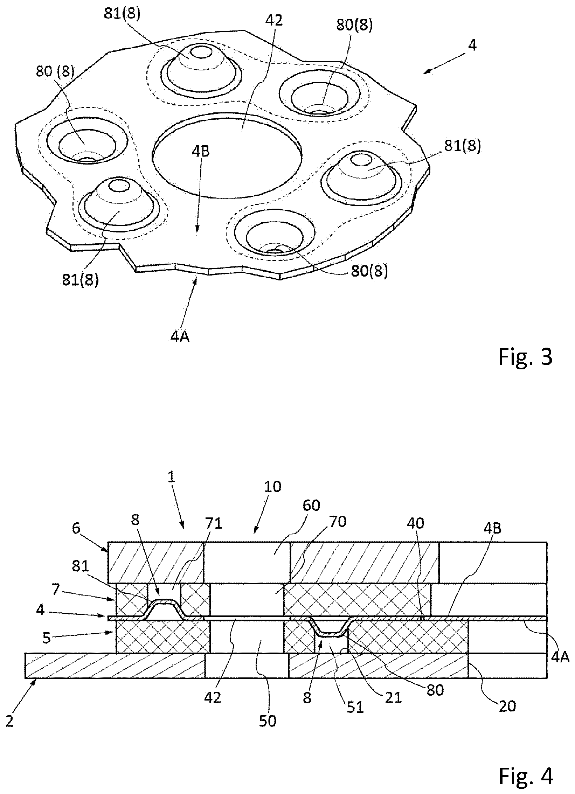

Le joint d'appui 5 permet d'assurer l'étanchéité périphérique entre le panneau d'explosion 1, plus particulièrement entre la feuille 4, et l'enceinte 2. Le joint d'appui 5 est en matériau compressible et potentiellement de qualité alimentaire, et constitué d'un matériau connu en soi. Le joint d'appui 5 est de préférence rendu solidaire de la feuille 4 lors de la fabrication du panneau d'explosion, par collage. Le joint d'appui 5 dessine un cadre qui a la forme de la périphérie de la feuille 4 et qui recouvre la zone de fragilisation 40 sur la face inférieure 4A de la feuille (figures 4 et 5). En variante, le joint d'appui 5 pourrait recouvrir toute la face inférieure 4A de la feuille destinée à être en regard de l'enceinte 2.

Le cadre 6 de bridage présente une géométrie qui correspond à la périphérie de la feuille 4.

Le joint d'interface 7 présente une géométrie qui correspond à celle du cadre 6 de bridage. Le joint d'interface 7 recouvre également la zone de fragilisation 40 (figures 4 et 5).

Les joints d'appui 5 et d'interface 7 sont de préférence rapportés par collage sur chacune des faces de la feuille 4, respectivement sur la face inférieure 4A et la face supérieure 4B de la feuille 4. Dans une variante, le joint d'interface 7 peut être rapporté par collage contre le cadre 6 de bridage.

La fixation du panneau d'explosion 1 se fait sur l'ensemble de sa périphérie grâce aux moyens de serrage 3, en particulier par boulonnage. Aussi, à titre d'exemple de moyens de serrage 3, les moyens de serrage 3 comportent une vis 30 et un écrou 31. La vis 30 comprend un corps fileté 32 qui traverse l'épaisseur du panneau d'explosion 1 et l'enceinte 2, et une tête 33 qui est accessible du côté extérieur du panneau 1, depuis le cadre 6 de bridage. L'écrou 31 coopère avec le corps 32 de vis, à l'opposé de la tête 33 et du côté intérieur de l'enceinte 2. De préférence, une rondelle 34 est prévue entre la tête de vis 33 et le cadre 6 de bridage.

Pour le passage des moyens de serrage 3 (figure 5), en particulier du corps de vis 32, le panneau d'explosion 1 présente ses orifices de fixation 10 qui sont agencés de préférence à intervalles réguliers (figure 1). Chacun des orifices de fixation 10 du panneau 1 (figure 2 et figure 4) correspond à des alésages respectifs et en regard, 60 du cadre de bridage 6, 70 du joint d'interface 7, 42 de la feuille 4, et 50 du joint d'appui 5. Les alésages 50 et 70 des joints d'étanchéité d'appui 5 et d'interface 7 présentent un diamètre ajusté à la section de moyens de serrage 3 tels que le corps 32 de vis ou d'une tige filetée, destinés à être introduits dans l'orifice de fixation 10 du panneau d'explosion de sorte que lors de la compression des joints, le matériau des joints s'insère dans le filetage des moyens de serrage, garantissant une parfaite étanchéité.

Afin d'écraser le joint d'appui 5 de manière pondérée et cela sur toute la périphérie, et de préférence également pour le joint d'interface 7, l'opérateur doit effectuer un couple de serrage maîtrisé pour chacun des moyens de serrage 3. A cet effet, le panneau d'explosion 1 comporte selon l'invention les moyens d'ajustage en serrage 8, ces moyens d'ajustage en serrage 8 étant intégrés de manière monobloc à la feuille 4 et étant disposés autour de chacun des alésages 42 de la feuille 4. De préférence, les moyens d'ajustage en serrage 8 sont multiples pour un seul alésage 42 de la feuille et sont répartis de manière équilibrée autour de l'alésage 42. Les moyens d'ajustage en serrage 8 permettent à l'opérateur d'arrêter le serrage au moment où il ressent un point dur concomitamment à la compression du joint d'étanchéité d'appui 5 pris en sandwich entre la feuille 4 et la surface rigide 21 de l'enceinte 2. Les moyens d'ajustage en serrage 8 viennent en butée (figure 5) contre la surface rigide 21 de l'enceinte 2, opposée à la feuille métallique 4. La répartition homogène des moyens d'ajustage en serrage 8 autour de chaque alésage 42 de la feuille 4 procure une compression d'épaisseur uniforme autour de chaque alésage 42.

Comme illustré de manière détaillée sur la figure 3 et sur les figures 4 et 5, les moyens d'ajustage en serrage 8 forment à titre d'exemple des bosselages 80 au moins sur la face inférieure 4A de la feuille 4, et de préférence également des bosselages 81 sur la face supérieure 4B. Les bosselages 80 et 81 sont de préférence issus d'une opération d'emboutissage afin de déformer de manière localisée et sur un certaine hauteur la tôle constitutive de la feuille 4 métallique. Les moyens d'ajustage en serrage 8 solidaires de la feuille 4 font donc saillie par rapport à au moins l'une de faces, de préférence par rapport à chacune des faces 4A et 4B de la feuille 4. Les bosselages 80 et 81 s'étendent dans des directions opposées, perpendiculairement au plan général de la feuille 4.

Les moyens d'ajustage en serrage 8 sont disposés sur au moins une face de la feuille 4, en particulier au moins sur la face inférieure 4A en contact avec le joint d'appui 5 qui est destiné à être plaqué contre l'enceinte 2 à protéger. Cela procure un calibrage de l'épaisseur du joint d'appui 5 autour de l'ouverture de l'enceinte 2 pour justement garantir avant tout une bonne étanchéité par rapport à l'enceinte 2.

De préférence, les moyens d'ajustage en serrage 8 sont disposés sur chacune des faces inférieure 4A (bosselages 80) et supérieure 4B (bosselages 81) de la feuille 4 de façon à calibrer la compression, d'une part du joint d'appui 5, et d'autre part, du joint d'interface 7, et cela de manière concomitante. Ce calibrage de part et d'autre de la feuille métallique 4 et donc de la zone de fragilisation 40 qui est recouverte sur chacune des faces de la feuille 4, par le joint d'appui 5 et le joint d'interface 7, évite de trop écraser lesdits joints contre ladite zone de fragilisation 40 risquant sinon de trop la comprimer et de la déchirer.

Les bosselages 80 et 81 présentent ici une forme tronconique et sont à base circulaire mais peuvent présenter une autre forme.

Les moyens d'ajustage en serrage 8 associés à une face de la feuille 4 (les bosselages 80 ou 81) sont répartis de manière homogène autour de chaque alésage 42 de la feuille, et donc autour de chaque orifice de fixation 10 du panneau d'explosion, de façon à engendrer une compression équilibrée en épaisseur du joint associé auxdits moyens d'ajustage en serrage 8 (auxdits bosselages). Le nombre de bosselages 80 et 81 sont avantageusement fonction du diamètre de l'orifice de fixation 10 du panneau 1. Par exemple, pour un diamètre d'orifice de fixation de 12 mm, le nombre de bosselages 80 sur la face inférieure 4A peut être de trois, et le nombre de bosselages 81 de la face supérieure 4B est également de trois.

De préférence, lorsque chacune des faces inférieure 4A et supérieure 4B comprend des bosselages 80 et 81, ils sont agencés par couple rapprochés pour un bosselage 80 d'une face et un bosselage 81 de la face opposée (schématisé par les entourages en pointillés sur la figure 3), ce qui permet de réduire la zone pleine entre deux bosselages opposés 80 et 81 d'un couple et de diminuer le risque de déformation de la feuille 4 entre deux bosselages opposés et rapprochés 80 et 81 lors du serrage, de façon à éviter d'écraser anormalement les joints d'étanchéité 5 et 7.

La hauteur (dimension perpendiculaire au plan de la feuille 4) d'un bosselage 80, 81 est de dimension adaptée pour correspondre à la compression voulue du joint d'étanchéité associé - joint d'appui 5 ou joint d'interface 7 - qui est solidaire de la face depuis laquelle fait saillie le bosselage. Pour les bosselages 80 de la face inférieure 4A, leur hauteur correspond à la grandeur de compression idéale du joint d'appui 5 pour assurer l'étanchéité autour de l'ouverture de l'enceinte 2. Pour les bosselages 80 et 81 des deux faces opposées 4A et 4B de la feuille, leur hauteur est adaptée afin que l'écrasement des deux joints respectifs d'appui 5 et d'interface 7 n'engendre pas une dégradation de la zone de fragilisation 40. La hauteur des bosselages est par exemple de 2 mm lorsque l'épaisseur des joints d'appui 5 et d'interface 7 est par exemple de 4 mm.

De plus, lors de la compression de chaque joint d'appui 5 et chaque joint d'interface 7, afin de faciliter la mise en butée des moyens d'ajustage en serrage 8 (bosselages 80 et 81) contre une surface dure (surface 21 de l'enceinte et face inférieure du cadre 6 de bridage), les joints d'appui 5 et joint d'interface 7 comportent (comme montré plus en détail sur la figure 4) autour de chacun de leurs alésages respectifs 50 et 70 de fixation du panneau, des trous (traversants) 51 et respectivement 71 qui sont en vis-à-vis des moyens d'ajustage en serrage 8 (en vis-à-vis respectivement des bosselages 80 et 81).

La fixation du panneau d'explosion 1 est mise en œuvre de la manière suivante. La feuille 4 intégrant les moyens d'ajustage en serrage 8 et les joints d'étanchéité 5 et 7, est positionnée autour de l'ouverture de l'enceinte 2. Puis, le cadre 6 de bridage est rapporté dessus. Enfin, les moyens serrage 3 amovibles sont rapportés en étant introduits au niveau de chacun des orifices de fixation 10. Le serrage des moyens de serrage 3 engendre la compression du joint d'appui 5 et du joint d'interface 7. Le serrage devient suffisant (ce qui correspond au couple de serrage optimal) lorsque l'extrémité des bosselages 80 et 81 vient en butée, respectivement contre la surface rigide 21 de l'enceinte 2 et contre le cadre 6 de bridage (figure 5).

## Revendications

1. Panneau d'explosion (1) comportant une feuille (4) métallique qui est dotée d'une zone de fragilisation (40), un cadre (6) dit de bridage qui est agencé sur la périphérie de la feuille (4), et au moins un joint d'étanchéité (5, 7), en particulier un joint d'étanchéité dit joint d'appui (5) qui est agencé au moins en périphérie et contre la feuille (4) à l'opposé de cadre (6) de bridage, ainsi que des moyens d'ajustage en serrage (8), le panneau comportant des orifices de fixation (10) qui traversent l'épaisseur du cadre (6) de bridage, de la feuille (4) et dudit au moins un joint d'étanchéité (5, 7), **caractérisé en ce que** les moyens d'ajustage en serrage (8) sont intégrés de manière monobloc à la feuille (4).

2. Panneau d'explosion selon la revendication 1, **caractérisé en ce que** les moyens d'ajustage en serrage (8) sont disposés sur au moins une face de la feuille (4) et autour d'alésages (42) constituant partie des orifices de fixation (10), de préférence sur au moins la face dite inférieure (4A) de la feuille (4) en regard du joint d'appui (5).

3. Panneau d'explosion selon la revendication 1 ou 2, **caractérisé en ce que**, la feuille présentant deux faces opposées (4A, 4B), les moyens d'ajustage en serrage (8) sont disposés sur les deux faces opposées (4A, 4B) de la feuille et autour des orifices de fixation (10).

4. Panneau d'explosion selon l'une quelconque des revendications précédentes, **caractérisé en ce que** les moyens d'ajustage en serrage (8) forment des bosselages (80, 81), en particulier issus d'une déformation par emboutissage de la feuille (4).

5. Panneau d'explosion selon l'une quelconque des revendications précédentes, **caractérisé en ce que** les moyens d'ajustage en serrage (8) forment une alternance de plusieurs bosselages (80, 81) sur chacune des faces (4A, 4B) de la feuille (4).

6. Panneau d'explosion selon la revendication précédente, **caractérisé en ce que** les bosselages (80, 81) sont répartis tout autour d'un alésage (42) de la feuille constituant partie d'un orifice de fixation (10), la répartition des bosselages sur les deux faces opposées (4A, 4B) de la feuille étant telle que le bosselage d'une face et le bosselage immédiatement adjacent de la face opposée forment un couple dont la distance de séparation est plus courte que la distance séparant un autre couple de bosselages.

7. Panneau d'explosion selon l'une quelconque des revendications précédentes, **caractérisé en ce que** les moyens d'ajustage en serrage (8) sont répartis de manière équilibrée tout autour des orifices de fixation (10).

8. Panneau d'explosion selon l'une quelconque des revendications précédentes, **caractérisé en ce que** ledit au moins un joint d'étanchéité (5, 7) comporte des trous (51, 71) en vis-à-vis des moyens d'ajustage en serrage (8).

9. Panneau d'explosion selon l'une quelconque des revendications précédentes, **caractérisé en ce que** ledit au moins un joint d'étanchéité (5, 7) comporte des alésages (50, 70) qui constituent partie des orifices de fixation (10), chacun des alésages (50, 70) dans ledit au moins un joint d'étanchéité présente un diamètre ajusté à la section de moyens de serrage (3) destinés à être introduits dans les orifices de fixation (10) et en particulier tel que le matériau du joint soit destiné à s'insérer dans le filetage de corps filetés (32) des moyens de serrage (3).

10. Utilisation du panneau d'explosion selon l'une quelconque des revendications précédentes, pour des silos, cuves, containers de batteries, systèmes de filtration, ou encore des machines de manutention ou de transformation de matière.

## Patentansprüche

1. Explosionsschutzplatte (1) bestehend aus einem Metallblech (4) mit einer Schwächungszone (40), einem Rahmen (6), der als Klemmrahmen bezeichnet wird und am Umfang des Blechs (4) angeordnet ist, und mindestens einer Dichtung (5, 7), insbesondere einer Dichtung, die als Stützdichtung (5) bezeichnet wird und mindestens am Umfang und an dem Blech (4) gegenüber dem Klemmrahmen (6) angeordnet ist, sowie Klemmeinstellmitteln (8), wobei die Platte Befestigungslöcher (10) aufweist, die durch die Dicke des Klemmrahmens (6), des Blechs (4) und der mindestens einen Dichtung (5, 7) verlaufen, **dadurch gekennzeichnet, dass** die Klemmeinstellmittel (8) monoblockartig in das Blech (4) integriert sind.

2. Explosionsschutzplatte nach Anspruch 1, **dadurch gekennzeichnet, dass** die Klemmeinstellmittel (8) auf mindestens einer Seite des Blechs (4) und um Bohrungen (42) angeordnet sind, die Teil der Befestigungslöcher (10) sind, vorzugsweise auf mindestens der sogenannten unteren Seite (4A) des Blechs (4) gegenüber der Stützverbindung (5).

3. Explosionsschutzplatte nach Anspruch 1 oder 2, **dadurch gekennzeichnet, dass** die Platte zwei gegenüberliegende Seiten (4A, 4B) aufweist, die Klemmeinstellmittel (8) auf den beiden gegenüberliegenden Seiten (4A, 4B) der Platte und um die Befestigungslöcher (10) herum angeordnet sind.

4. Explosionsschutzplatte nach einem der vorhergehenden Ansprüche, **dadurch gekennzeichnet, dass** die Klemmeinstellmittel (8) Ausprägungen (80, 81) bilden, die insbesondere durch eine Verformung des Blechs (4) beim Stanzen entstehen.

5. Explosionsschutzplatte nach einem der vorhergehenden Ansprüche, **dadurch gekennzeichnet, dass** die Klemmeinstellmittel (8) auf jeder der Seiten (4A, 4B) des Blechs (4) eine Abfolge von mehreren Ausprägungen (80, 81) bilden.

6. Explosionsschutzplatte nach dem vorhergehenden Anspruch, **dadurch gekennzeichnet, dass** die Ausprägungen (80, 81) um eine Bohrung (42) des Blechs, die Teil eines Befestigungslochs (10) ist, herum verteilt sind, wobei die Verteilung der Ausprägungen auf den beiden gegenüberliegenden Seiten (4A, 4B) des Blechs so ist, dass die Ausprägung der einen Seite und die unmittelbar benachbarte Ausprägung der gegenüberliegenden Seite ein Paar bilden, dessen Abstand kleiner ist als der Abstand zwischen einem anderen Paar von Ausprägungen.

7. Explosionsschutzplatte nach einem der vorhergehenden Ansprüche, **dadurch gekennzeichnet, dass** die Klemmeinstellmittel (8) gleichmäßig um die Befestigungslöcher (10) verteilt sind.

8. Explosionsschutzplatte nach einem der vorhergehenden Ansprüche, **dadurch gekennzeichnet, dass** die mindestens eine Dichtung (5, 7) gegenüber den Klemmeinstellmitteln (8) Löcher (51, 71) aufweist.

9. Explosionsschutzplatte nach einem der vorhergehenden Ansprüche, **dadurch gekennzeichnet, dass** die mindestens eine Dichtung (5, 7) Bohrungen (50, 70) aufweist, die Teil der Befestigungslöcher (10) sind, wobei jede der Bohrungen (50, 70) in der mindestens einen Dichtung einen Durchmesser aufweist, der auf den Querschnitt der Klemmmittel (3) abgestimmt ist, die in die Befestigungslöcher (10) eingesetzt werden soll, und insbesondere so, dass das Material der Dichtung in das Gewinde der Gewindekörper (32) der Klemmmittel (3) passt.

10. Verwendung der Explosionsschutzplatte nach einem der vorhergehenden Ansprüche für Silos, Tanks, Batteriebehälter, Filtrationssysteme oder auch Materialförder- oder Verarbeitungsmaschinen.

## Claims

1. Explosion panel (1) comprising a metal sheet (4) which has a weakening zone (40), a frame (6) called a clamping frame which is arranged on the periphery of the sheet (4), and at least one sealing gasket (5, 7), in particular a sealing gasket called a support gasket (5) which is arranged at least on the periphery and against the sheet (4) opposite the clamping frame (6), as well as tightening adjustment means (8), the panel comprising fixing holes (10) which pass through the thickness of the clamping frame (6), the sheet (4) and said at least one sealing gasket (5, 7), **characterized in that** the tightening adjustment means (8) are integrated in a monobloc manner into the sheet (4).

2. Explosion panel according to claim 1, **characterized in that** the tightening adjustment means (8) are laid out on at least a face of the sheet (4) and around borings (42) that are parts of the fixing holes (10), preferably on at least the so-called lower face (4A) of the sheet (4) opposite the support gasket (5).

3. Explosion panel according to claim 1 or 2, **characterized in that**, the sheet having two opposite faces (4A, 4B), the tightening adjustment means (8) are arranged on the two opposite faces (4A, 4B) of the sheet and around the fixing holes (10).

4. Explosion panel according to any one of the preceding claims, **characterized in that** the tightening adjustment means (8) form embossments (80, 81), in particular resulting from a deformation by stamping of the sheet (4).

5. Explosion panel according to any one of the preceding claims, **characterized in that** the tightening adjustment means (8) form an alternation of several embossments (80, 81) on each of the faces (4A, 4B) of the sheet (4).

6. Explosion panel according to the preceding claim, **characterized in that** the embossments (80, 81) are distributed all around a bore (42) of the sheet forming part of a fixing hole (10), the distribution of the embossments on the two opposite faces (4A, 4B) of the sheet being such that the embossment of one face and the immediately adjacent embossment of the opposite face form a pair whose separation distance is shorter than the distance separating another pair of embossments.

7. Explosion panel according to any one of the preceding claims, **characterized in that** the tightening adjustment means (8) are distributed in a balanced manner all around the fixing holes (10).

8. Explosion panel according to any one of the preceding claims, **characterized in that** said at least one sealing gasket (5, 7) has holes (51, 71) opposite the tightening adjustment means (8).

9. Explosion panel according to any one of the preceding claims, **characterized in that** said at least one sealing gasket (5, 7) has bores (50, 70) which form part of the fixing holes (10), each of the bores (50, 70) in said at least one sealing gasket has a diameter adjusted to the section of tightening means (3) intended to be inserted into the fixing holes (10) and in particular such that the material of the gasket is intended to fit into the thread of threaded bodies (32) of the tightening means (3).

10. Use of the explosion panel according to any one of the preceding claims, for silos, tanks, battery containers, filtration systems, or even material handling or processing machines.
